# EUROPEAN PATENT APPLICATION

(11) **EP 2 273 417 A2**
(43) Date of publication of application: **12.01.2011**
(21) Application number: 10165172.7
(22) Date of filing: 08.06.2010
(51) Int. Cl.: G06F 21/20

(54) **Device authority for authenticating a user of an on-line service**

(30) Priority: 23.06.2009 US 219457 P
(71) Applicant: Uniloc USA, Inc., Irvine, CA 92612 (US)
(72) Inventor: Etchegoyen, Craig Stephen, Irvine CA 92612 (US)
(74) Representative: Casbon, Paul Richard

(57) **Abstract**

A method for authenticating a user of a third party online service includes steps for receiving a device identifier and registration information from a client device of the user, the registration information comprising data that links the device identifier with a third-party account, gathering reputational information regarding the third-party account from one or more reputational sources, associating the reputational information with the device identifier, verifying, in response to receiving a reputation request regarding the third-party account, a request source of the reputation request, and providing, in response to verification of the request source, the reputational infornation to the request source. The method may be executed by a device authority, such as a computer server, operating through a computer network.

## Description

This application claims priority to U.S. Provisional Application No. 61/219,457 which was filed June 23, 2009 and which is fully incorporated herein by reference.

### BACKGROUND

### Field of the Invention

The present invention is directed toward systems for authenticating online service users, and more particularly, to a system that interfaces with each user's network device to measure the client system's hardware configuration and thereby generate a device identifier that can be used to authenticate the user.

### Description of the Related Art

Currently, there are limited ways to authenticate online users of services and content, such as social networking sites, auction sites, shopping sites, etc. One known approach has been to require a credit card to create an account or authenticate an account user. The hope is that the collection of personally identifiable information, such as credit card data, driver's licenses, etc. will keep online users accountable for their actions. However, such approaches may be inconvenient for all users, including legitimate ones who do not have a credit card or do not wish to provide personal information, and thereby may drive potential legitimate users away.

Accordingly, it would be very desirable to provide an authentication service that provides a reliable identification of users, without being unduly burdensome for online service users. Such a service may be used alone, or in conjunction with other security/authentication measures.

### SUMMARY OF THE INVENTION

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with techniques for authenticating a user of a third party online service. For example, the method may involve: (a) receiving a device identifier and a registration information from a client device of the user; (b) gathering reputational information regarding the at least one third-party account from one or more reputational sources; (c) associating the reputational information with the device identifier; (d) in response to receiving a reputation request regarding the at least one third-party account, verifying a request source of the reputation request; and (e) in response to verification of the request source, providing the reputational information to the request source. In related aspects, step (b) may involve a credit check regarding a credit score(s) (e.g., a FICO score or the like) regarding the user and associating the credit score with the device identifier.

In accordance with other aspects of the embodiments described herein, there is provided a method that may involve: (a) sending a reputation request for reputational information regarding a service account to a device authority, the request comprising a device identifier associated with the service account; (b) in response to the device authority verifying the reputation request, receiving the reputational information; and (c) providing for display the reputational information regarding the service account to one or more other users of the service.

In further related aspects, one or more of the techniques and methodologies described herein may be performed by embedded applications, platforms, or systems. The techniques implemented by a network device described herein may alternatively, or additionally, be performed by applications or components that are embedded in such devices (e.g., mobile phones, digital watches, personal digital assistants (PDAs)). It is further noted that the methods described herein may be performed by a general-purpose computer system and/or an embedded application or component of a special-purpose system.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 provides a block diagram of an exemplary system for authenticating online service users.

FIG. 2 provides a block diagram of an exemplary machine signature comprising a device identifier and an IP address.

FIG. 3 provides a block diagram of an exemplary device identifier comprising a variable key portion and a system key portion.

FIG. 4 illustrates an exemplary screenshot showing a display of an online profile with an exemplary registered user indicator.

FIG. 5 provides exemplary icons that may be used to indicate the registration status of online service users.

FIG. 6A provides a sequence diagram for an exemplary system for authenticating online service users, wherein the device identifier is generated by an applet on the user's computer.

FIG. 6B provides a sequence diagram for another exemplary system for authenticating online service users, wherein the device identifier is generated by an applet on the user's computer.

FIG. 7A provides a sequence diagram for an exemplary system for authenticating online service users, wherein the device identifier is generated at an authentication server.

FIG. 7B provides a sequence diagram for another exemplary system for authenticating online service users, wherein the device identifier is generated at an authentication server.

FIG. 8 is a flow chart illustrating steps of one approach to generating device identifiers for computers used by online service users.

FIG. 9 is a flow chart illustrating steps of another approach to generating device identifiers for computers used by online service users.

FIG. 10 is a flow chart illustrating steps of one approach to authenticating online service users.

FIG. 11A shows an exemplary system for authenticating a user of a third party online service.

FIG. 11B shows one embodiment of an apparatus for authenticating a user of an online service.

FIG. 12 shows one embodiment of an apparatus for authenticating a user of an online service.

### DETAILED DESCRIPTION

The present technology provides for an improved system and method of identifying or tracking online service users. Specifically, the present technology utilizes measurable hardware characteristics of a local client that any online user of any age has in front of them when accessing the internet, such as their connected computer or computing device for identification and user tracking. The present technology allows users to register their computer(s) or other client hardware and to associate the registered computers with one or more online accounts, such as accounts for social networking accounts, online auctioning or shopping accounts, etc.

For example, in the context of social networking sites, such as MySpace®, Facebook®, Orkut®, Friendster®, or Xanga®, the present technology gives parents and social networking site administrators the power to protect their children from online threats. It does this by letting online users take the extra security step of linking their accounts to the actual computers or other client hardware they use, giving their online friends a higher level of trust that they are who they say they are, and not an online fraudster or predator.

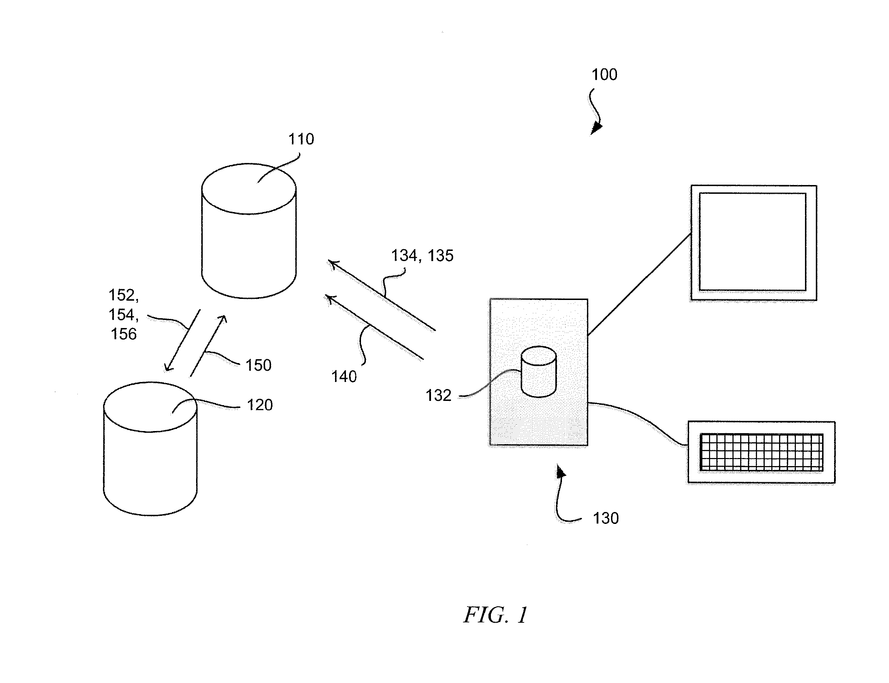

In accordance with one aspect of the present technology, there is provided a system and method for authenticating the identity of web site users by utilizing the physical device parameters of the users' respective client hardware. In one embodiment, shown in FIG. 1, there is provided a system 100 with an authentication server 110 that is in operative communication with numerous other servers, such as server 120, as well as user computers, such as exemplary user computer 130. The user computer 130 comprises a web browser along with an application or an applet 132 that that can run within the web browser.

For example, suppose server 120 hosts a social networking site. The authentication server 110, along with an applet 132 running on the user computer 130, may give parents and social networking sites the tools for protecting children from online threats. The system 100 may operate to link users' online accounts to the actual computers or machines they use to access the networking website.

The applet 132 may include a registration routine that collects information regarding the user's computer 130 by checking a number of parameters which are expected to be unique to the user machine environment. The parameters checked may include, for example, hard disk volume name, user name, computer name, user password, hard disk initialization date, etc. The collected information may include information that identifies the hardware comprising the platform on which the web browser runs, such as, for example, CPU number (where available), or unique parameters associated with the firmware in use. The system information may further include system configuration information, such as amount of memory, type of processor, software or operating system serial number, etc.

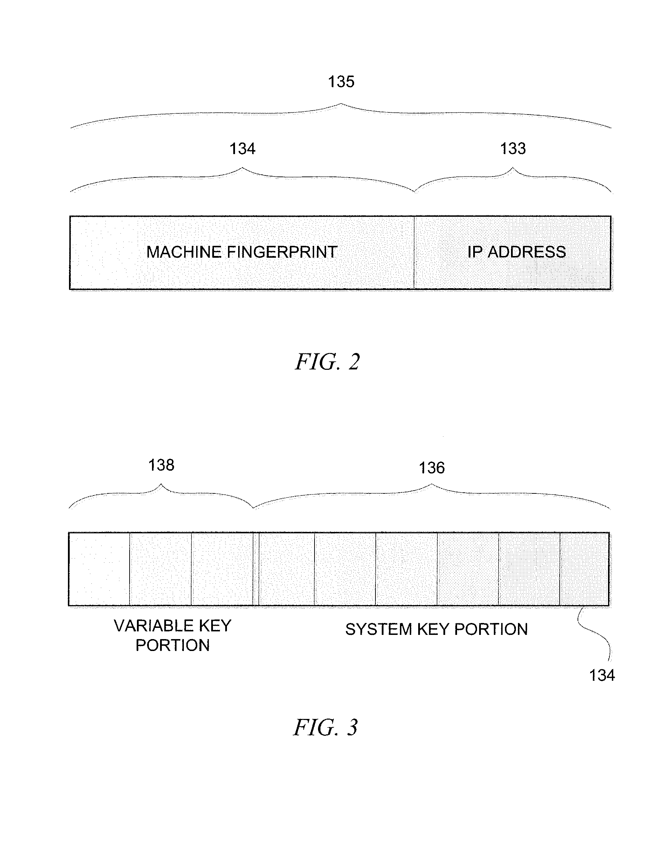

Based on the collected information, the applet 132 may generate a device identifier, such as a machine fingerprint 134, that is unique for the user computer 130. In the alternative, or in addition, the applet 132 may gather and send the system parameters to the authentication server 110, which in turn generates the machine fingerprint 134. The machine fingerprint 134 may be stored in a hidden directory of the computer 130 and/or at a remote location, such as the authentication server 110, as explained below. The machine fingerprint 134 may incorporate the computer's IP address to add another layer of specificity to a machine's signature. In the alternative, or in addition, the machine fingerprint 134 may be combined with the IP address 133 of the computer 130 to generate a machine signature 135 for the computer 130, as shown in FIG. 2.

It is noted that an application (e.g., applet 132) running on the network device (e.g., computer 130) or otherwise having access to the network device's hardware and file system may generate a unique device identifier (e.g., machine fingerprint 134) using a process that operates on data indicative of the network device's configuration and hardware. The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each identifier, to a very high degree of certainty, cannot be generated except by the suitably configured application operating on otherwise having access to the same network device on which the device identifier was first generated. Conversely, each identifier, again to a very high degree of certainty, can be successfully reproduced by the suitably configured application operating on or otherwise having access to the same network device on which the identifier was first generated.

The application may operate by performing a system scan to determine a present configuration of the network device. The application may then select the machine parameters to be used as input for generating the unique device identifier. Selection of parameters may vary depending on the system configuration. Once the parameters are selected, the application may generate the identifier.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; Blackbox model; Blackbox serial; Blackbox details; Blackbox damage map; Blackbox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: network device model; network device model IMEI; network device model IMSI; and network device model LCD.

The device identifier may also be e generated by utilizing machine parameters associated with one or more of the following: wireless 802.11; webcam; game controller; silicone serial; and PCI controller.

With reference to FIG. 3, in one embodiment, the device identifier (e.g., the machine fingerprint 134) may include two components - namely, a system key portion 136 and a variable key portion 138. The variable key portion 138 may be generated at the time of registration of computer 130 by reference to a variable platform parameter, such as via reference to system time information, although other parameters which are variable may be utilized in other embodiments. The system key portion 136 may include the above-described parameters expected to be unique to the user machine 130, such as, for example, hard disk volume name, user name, computer name, user password, hard disk initialization date, etc. Portions 136 and/or 138 may be combined with the IP address 133 of the computer 130 and/or other platform parameters to generate a machine signature 135.

The applet 132 may prompt the user to register with an online security service, and may electronically send the machine fingerprint 134 and/or machine signature 135 and information regarding his/her online account(s) to the authentication server 110, such as using a secured network connection. The authentication server 110 may encrypt and store all such received data regarding machine fingerprints 134 and online accounts.

When the registered user then uses the computer 130 to access a social networking site running on server 120, the applet 132 may detect that the machine fingerprint 134 has been created and transmitted to the authentication server 110. The applet may detect that one or more online networking accounts that are associated with the machine fingerprint 134 and have been registered for the user at the authentication server 110.

Then, in response to the computer 130 accessing the server 120, the applet 132 may transmit an authentication request signal 140 to the authentication server 110. The authentication request signal 140 may include the machine fingerprint 134 and/or machine signature and online account profile information. Server 110 may further receive user identification (ID) or other basic online account profile information 150 from server 120. By comparing the received profile information 150 from server 120 with the authentication request signal 140 from the computer 130, the authentication server 120 may determine whether the computer 130 has been registered for a given online account. In the alternative, or in addition, the applet 132 may transmit an authentication request signal 140 to the server 120, which in turn may communicate with the authentication server 110 to determine whether the user of computer 130 has registered with the online security service.

If the authentication server 110 verifies, based on the registered machine fingerprint 134 and any online networking accounts, that the computer 130 has been previously registered with the online security service for the online account that the user is trying to access, then the server 110 may send a registered user signal 152, indicating a high trust level, to server 120. If the authentication server 110 is not able to verify that the computer 130 has been previously registered with the online security service for the account that the user is trying to access, then the server 110 may send an unregistered user signal 154, indicating that the user is not registered, to server 120. In the alternative, or in addition, the server 110 may provide the user the opportunity to register the computer 130 with the online security service. If the authentication server 110 determines that the user's account has been flagged, such as, for example, when the website or online service access has been previously denied for computer 130, then the server 110 may send a problem user signal 156, indicating danger, to server 120.

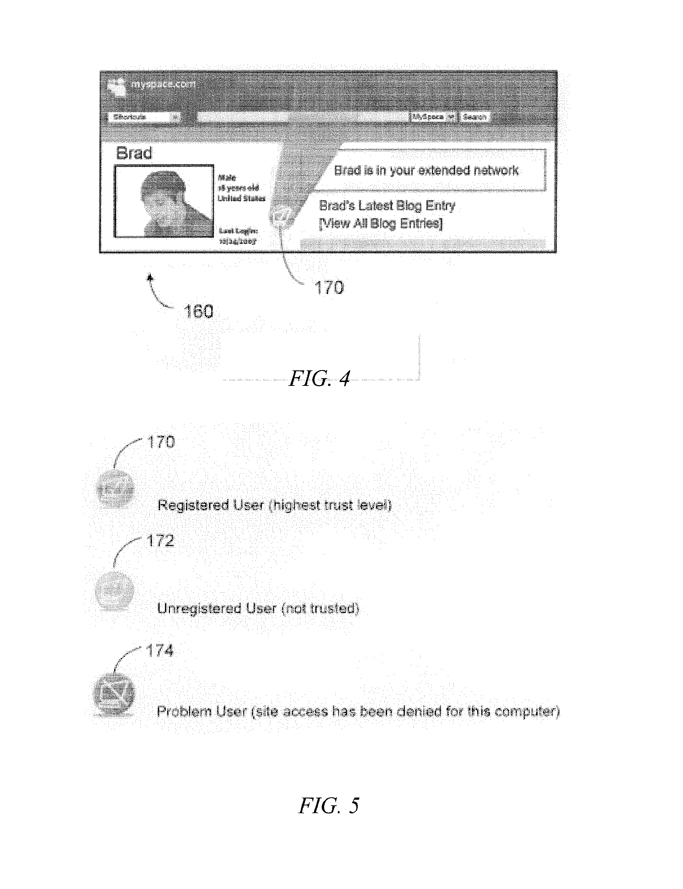

In response to the registered user signal 152, unregistered signal 154, or problem user signal 156 from the authentication server 110, server 120 may update or supplement the user's profile to indicate whether or not the user has registered with the online security service. For example, with reference to FIG. 4 the user's online profile 160 on server 120 may be updated to include a registered user indicator, such as a registered user icon 170 (e.g., a computer screen with a check mark inside it) to indicate that the user is a registered user and that there is a high level of trust with this particular user. As shown in FIG. 5, numerous types of icons with various shapes, motifs, and colors may be used to indicate whether the user is registered with the online security service. For example, an unregistered icon 172 (e.g., a computer screen with a question mark inside it) can be used to indicate that the user has not registered with the online security service. Similarly, a problem user icon 174 (e.g., a computer screen with a slash through it) may be used to indicate the user may pose a danger and should be avoided.

Online users displaying icon 170 on their online profile 160 may essentially convey to other website or online service users: "I am who I say I am because I am on my computer, and I am willing to be held accountable for my online actions." For normal and conscientious users, registration with the online security service is an easy choice. For malicious users, the creation of a computer fingerprint and registration with the online security service poses unacceptable risks.

Embodiments have been described herein in the context of online networking sites. However, it will be understood that the authentication methods and systems described herein may be applicable to any online service or site, particularly where online or user IDs are created and used. For example, the authentication technology described herein may be utilized in the context of an online auction or shopping sites, such as eBay® or the like. Machine fingerprinting and user ID registration with an online security service may be used to authenticate buyers and sellers on such auction or shopping sites. Moreover, it will be understood that the technology described herein may be applicable to any situation where a computer user needs to be authenticated, and in particular where it would be desirable to authenticate that a person registering with or using an online service with a given identity is not using hardware used for malicious purposes in the past, or is using hardware consistent with the user's past behavior.

Embodiments of fingerprinting and authentication methods and systems have described with reference to a user's computer. However, it will be understood that the fingerprinting and authentication approaches described herein are applicable to computing devices in general, including but limited to, desktops, laptops, tablet computers, PDAs, mobile devices, mobile phones, vehicle onboard computers, or any other network device capable of communication with a computer network.

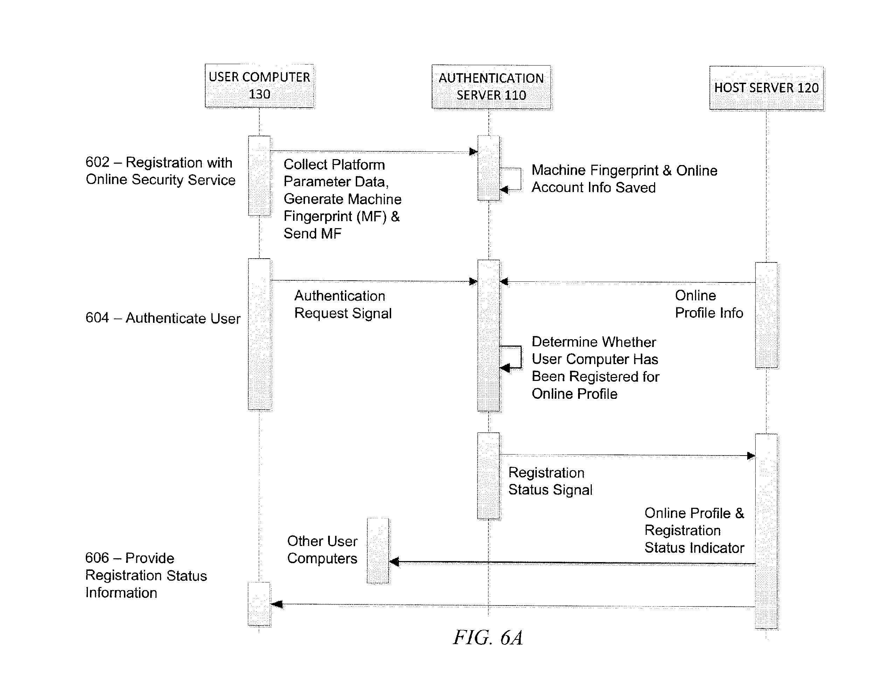

It will be understood that the described system for authenticating the identify of web site users via utilization of physical device parameters of the users' respective client hardware, can comprise any number of components or modules adapted to perform the authentication steps as will be known of ordinary skill in the art. For example, with reference to FIG. 6A, there is provided one embodiment of a system wherein an application or applet running on the user computer 130 may collect platform parameter data regarding the computer 130 and generate a machine fingerprint (step 602). The computer 130 may send the machine fingerprint to the authentication server 110. The authentication server 110 may also receive online account information from the computer 130 and/or the host server 120. The authentication server 110 may associate the received machine fingerprint with the appropriate online account information.

With continued reference to FIG. 6A, at step 604, in response to the computer 130 accessing the server 120, an application or applet (e.g., an applet comprising executable code for a Java Virtual Machine) on the user computer 130 may send an authentication request signal to the authentication server 110. Authentication server 110 may receive a given online profile information from the host server 120, and determine whether computer 130 has been registered the online profile information. Based on this determination at step 604, the authentication server 110 (at step 606) may send the appropriate registration status signal to the host server 120, which in turn may update the online profile information to include the user's registration status. The host server 120 may share the user's online profile information and registration status indicator (see FIGS. 4 and 5) with other user computers (i.e., anyone accessing the online service hosted by the sever 120).

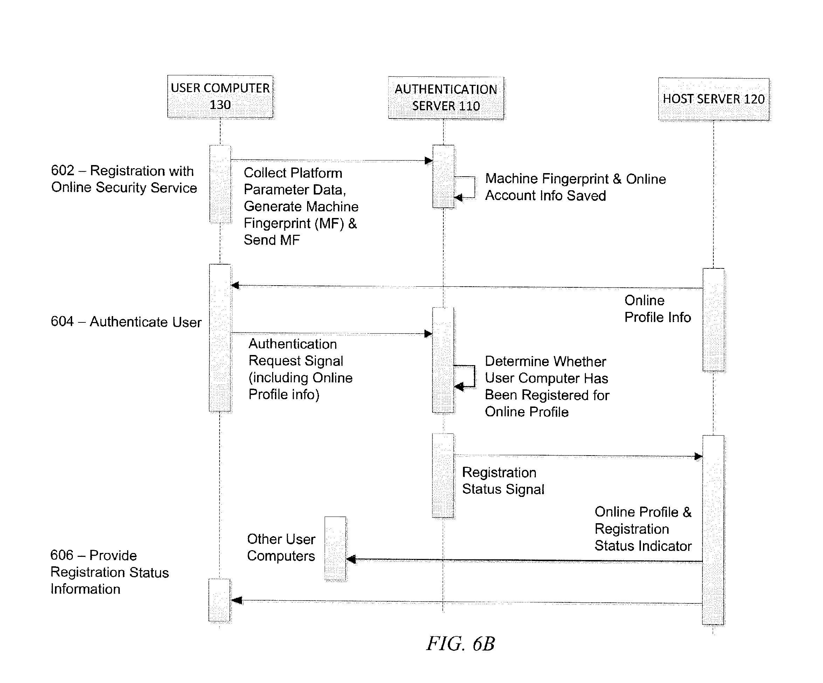

With reference to FIG. 6B, there is provided another embodiment of a user authentication system. In contrast to the system of FIG. 6A, at step 604, the user computer 130 receives the user's online profile information from the host server 120, and sends the authentication request signal (including the online profile information) to the authentication server 110. The authentication request signal may include the machine fingerprint and/or machine signature and/or online profile information. The authentication server 110 may receive the components of the authentication signal, such as the online profile information, from the host server 120 and/or the user computer 130. The rest of the system shown in FIG. 6B is similar to the system shown in FIG. 6A.

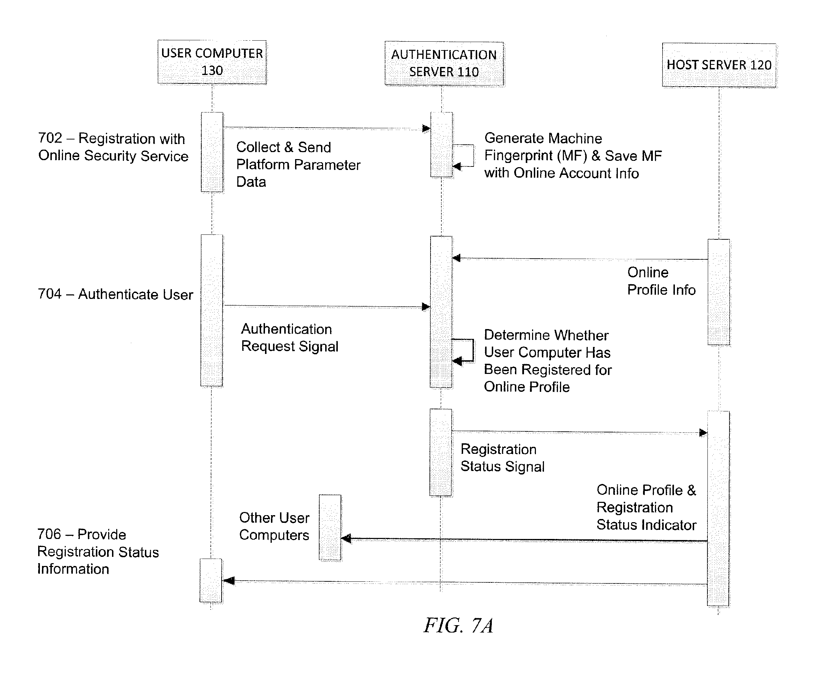

With reference to FIG. 7A, there is provided another embodiment of a user authentication system, wherein the application or applet running on the user computer 130 may collect platform parameter data regarding the computer 130 and send the collected data to the authentication server 110 (at step 702). The authentication server 110 in turn may generate the machine fingerprint regarding computer 130, and save it along with the online account information from the computer 130 and/or the host server 120. The rest of the system shown in FIG. 7A is similar to the system shown in FIG. 6A.

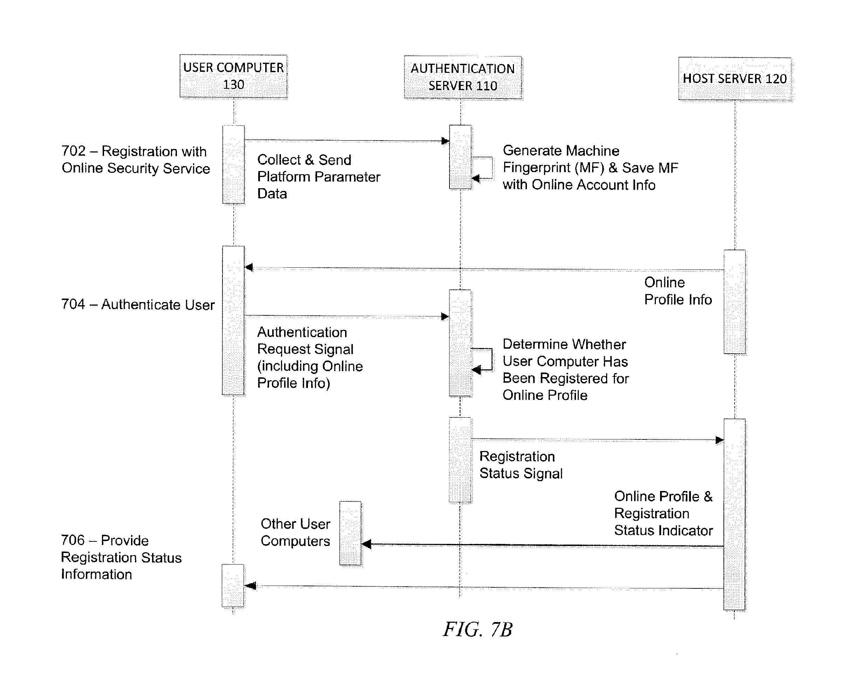

With reference to FIG. 7B, there is provided another embodiment of a user authentication system, wherein the application or applet running on the user computer 130 may collect platform parameter data regarding the computer 130 and send the collected data to the authentication server 110 (at step 702). As with the system of FIG. 7A, the authentication server 110 may generate the machine fingerprint regarding computer 130, and save it along with the online account information from the computer 130 and/or the host server 120 (at step 702). However, in contrast to the system of FIG. 7A, at step 704, the user computer 130 receives the user's online profile information from the host server 120, and sends the authentication request signal (including the online profile information) to the authentication server 110. The rest of the system shown in FIG. 7B is similar to the system shown in FIG. 7A.

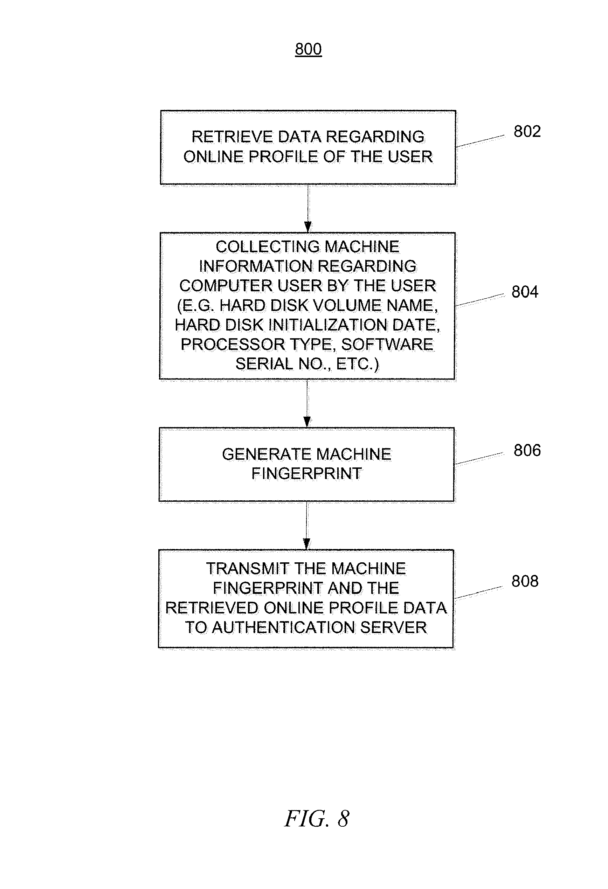

With reference to FIG. 8, there is provided a method 800 for authenticating a user of an online service that may comprise retrieving data regarding an online profile of the user for the online service (step 802), and collecting machine information regarding a computer being used by the user to access the online service (step 804). The step of collecting machine information may include checking at least one of hard disk volume name, hard disk initialization date, processor type, and/or software serial number of the computer. The step of collecting machine information may further include checking and using the IP address of the computer. At step 806, a machine fingerprint is generated based at least in part on the collected machine information. At step 808, the generated machine fingerprint and the retrieved online profile data are transmitted to an authentication server. The generated machine fingerprint may also be stored in a hidden file directory of the computer. The foregoing steps may be encoded as executable instructions in a computer-readable media, such as, for example, in a hard drive or in a portable media, such as an optical disk, electronic memory device, or magnetic tape, disk, or the like.

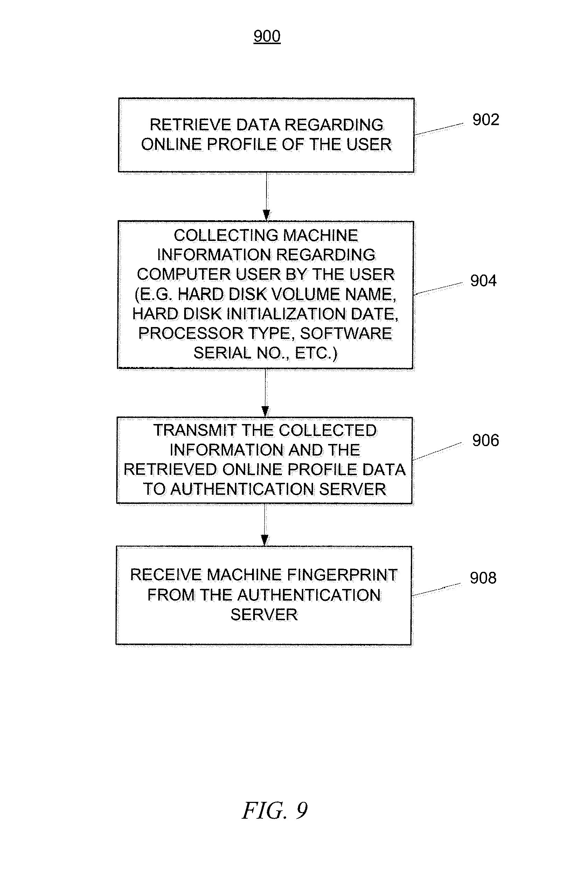

With reference to FIG. 9, there is provided another method 900 for authenticating a user of an online service that may comprise retrieving data regarding an online profile of the user for the online service (step 902), and collecting machine information regarding a computer being used by the user to access the online service (step 904). In contrast to the method of FIG. 8, a machine fingerprint is not generated; rather, at step 906, the collected machine information and the retrieved profile data may be transmitted to the authentication server. The authentication server in turn may generate a machine fingerprint for the user computer. At step 908, the machine fingerprint may be received from the authentication server. The received machine fingerprint may also be stored in a hidden file directory of the computer. The foregoing steps may be encoded as executable instructions in a computer-readable media, such as, for example, in a hard drive or in a portable media, such as an optical disk, electronic memory device, or magnetic tape, disk, or the like.

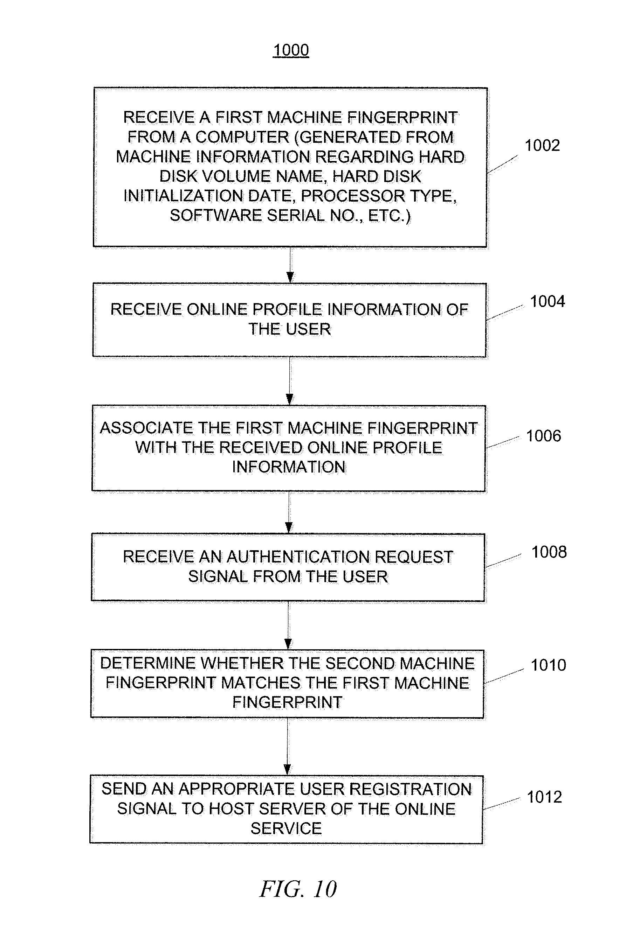

With reference to FIG. 10, there is provided a method for authenticating a user of an online service that may comprise receiving a first machine fingerprint from a computer being used by the user (step 1002). The first machine fingerprint may be generated from machine information regarding at least one of hard disk volume name, hard disk initialization date, processor type, and/or software serial number. The first machine fingerprint may be based at least in part on the IP address of the computer. At step 1004, online profile information of the user for the online service may be received. The first machine fingerprint may be associated with the received online profile information (step 1006). An authentication request signal may be received from the user (step 1008), wherein the request signal comprises a second machine fingerprint. At step 1010, the method may comprise determining whether the second machine fingerprint matches the first machine fingerprint. If so, a registered user signal may be transmitted to a server hosting the online service (step 1012), the registered user signal comprising instructions for the server to include a registered status indicator in the user's online profile information. If the second machine fingerprint does not match the first machine fingerprint, another appropriate user registration signal may be sent to the server hosting the online service at step 1012, resulting in the display of the appropriate registered status indicator (see FIGS. 4 and 5). The foregoing steps may be encoded as executable instructions in a computer-readable media, such as, for example, in a hard drive or in a portable media, such as an optical disk, electronic memory device, or magnetic tape, disk, or the like.

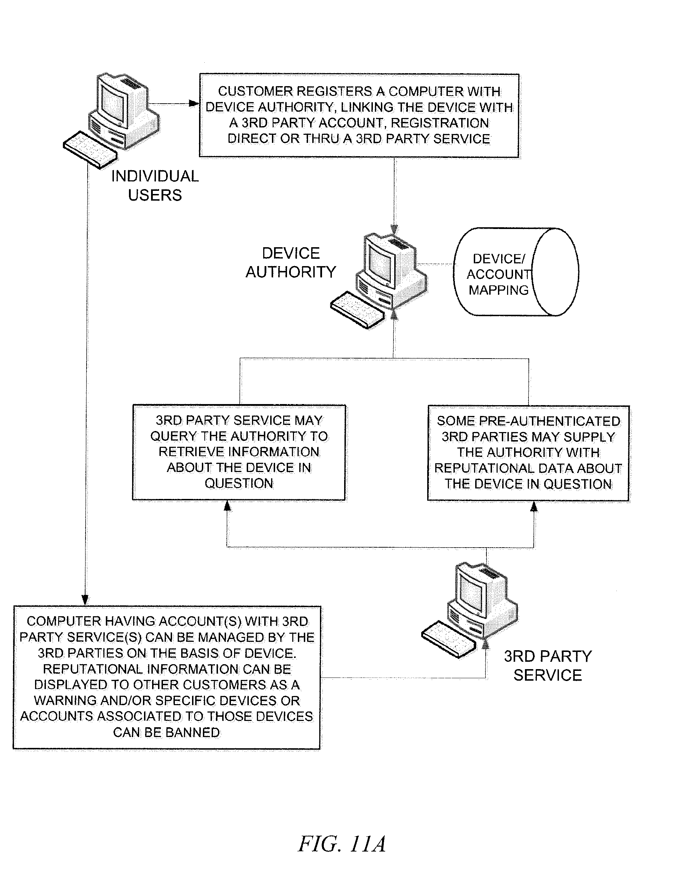

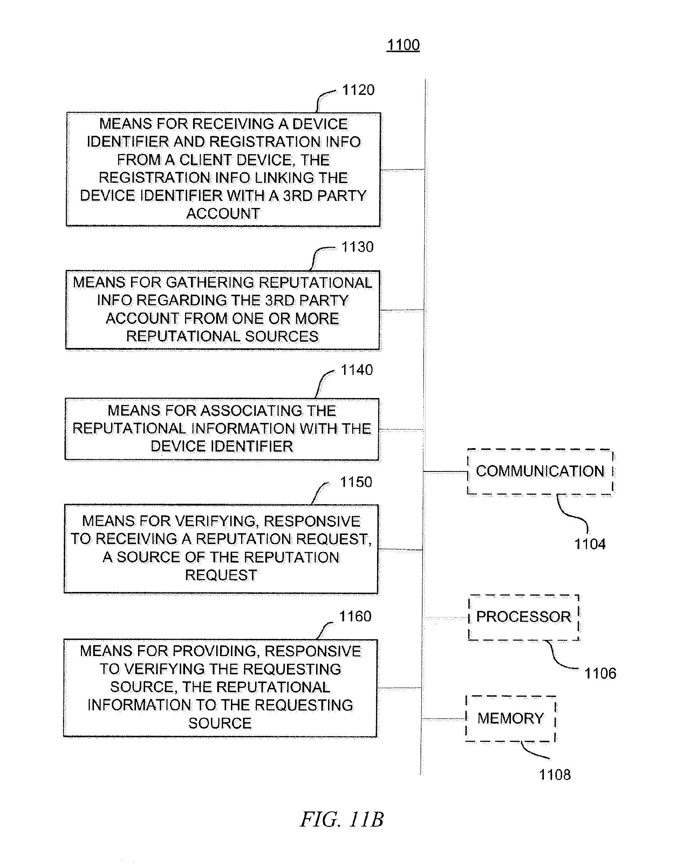

In accordance with one or more aspects of the embodiments described herein, there is provided a system for authenticating a user of a third party online service. An exemplary system is illustrated in FIG. 11A. In related aspects, there is provided an exemplary apparatus 1100 in FIG. 11B that may be configured as either a computing device, or as a processor or similar device for use within a computing device. As illustrated, apparatus 1100 may comprise a means 1120 for receiving a device identifier and a registration information from a client device of the user, the registration information comprising data that links the device identifier with at least one third-party account. Apparatus 1100 may comprise a means 1130 for gathering reputational information regarding the at least one third-party account from one or more reputational sources. Apparatus 1100 may comprise a means 1140 for associating the reputational information with the device identifier. Apparatus 1100 may comprise a means 1150 for, in response to receiving a reputation request regarding the at least one third-party account, verifying a request source of the reputation request. Apparatus 1100 may comprise a means 1160 for, in response to verification of the request source, providing the reputational information to the request source.

Means 1130 may comprise a means for obtaining a credit score regarding the user and associating the credit score with the device identifier. The credit score may comprise a FICO score or the like. Means 1130 may comprise a means for obtaining any credit score previously associated with the device identifier.

Apparatus 1100 may optionally include a processor module 1106 having at least one processor, in the case of apparatus 1100 configured as computing device, rather than as a processor. Processor 1106, in such case, may be in operative communication with means 1120-1160, and components thereof, via a bus 1102 or similar communication coupling. Processor 1106 may effect initiation and scheduling of the processes or functions performed by means 1120-1160, and components thereof.

Apparatus 1100 may include a transceiver/communication module 1104 for communicating with mobile nodes and/or other static nodes. A stand alone receiver and/or stand alone transmitter may be used in lieu of or in conjunction with communication module 1104.

Apparatus 1100 may optionally include a means for storing information, such as, for example, a memory device/module 1108. Computer readable medium or memory device/module 1108 may be operatively coupled to the other components of apparatus 1100 via bus 1102 or the like. The computer readable medium or memory device 1108 may be adapted to store computer readable instructions and data for effecting the processes and behavior of means 1120-1160, and components thereof, or processor 1106 (in the case of apparatus 1100 configured as a computing device) or the methods disclosed herein.

In related aspects, the memory module 1108 may optionally include executable code for the processor module 1106 to authenticate a user by: (a) receiving a device identifier and a registration information from a client device of the user; (b) gathering reputational information regarding the at least one third-party account from one or more reputational sources; (c) associating the reputational information with the device identifier; (d) in response to receiving a reputation request regarding the at least one third-party account, verifying a request source of the reputation request; and (e) in response to verification of the request source, providing the reputational information to the request source. One or more of steps (a)-(e) may be performed by processor module 1106 in lieu of or in conjunction with the means 1120-1160 described above.

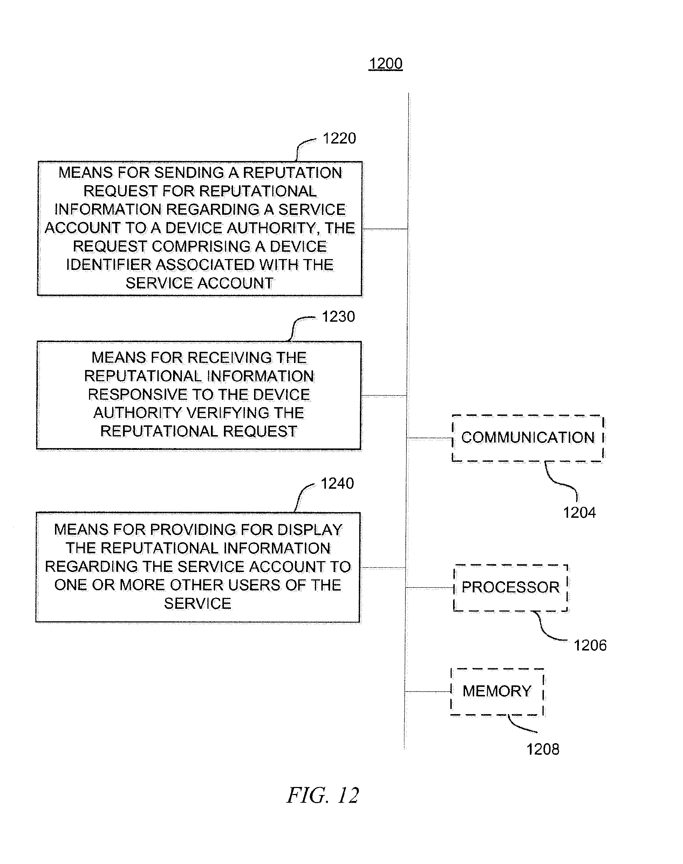

In related aspects, there is provided an exemplary apparatus 1200 in FIG. 12 that may be configured as either a computing device, or as a processor or similar device for use within a computing device. As illustrated, apparatus 1200 may comprise a means 1220 for sending a reputation request for reputational information regarding a service account to a device authority, the request comprising a device identifier associated with the service account. Apparatus 1200 may comprise a means 1230 for, in response to the device authority verifying the reputation request, receiving the reputational information. Apparatus 1200 may comprise a means 1240 for providing for display the reputational information regarding the service account to one or more other users of the service.

Apparatus 1200 may optionally include a processor module 1206 having at least one processor, in the case of apparatus 1200 configured as computing device, rather than as a processor. Processor 1206, in such case, may be in operative communication with means 1220-1240, and components thereof, via a bus 1202 or similar communication coupling. Processor 1206 may effect initiation and scheduling of the processes or functions performed by means 1220-1240, and components thereof.

Apparatus 1200 may include a transceiver/communication module 1204 for communicating with mobile nodes and/or other static nodes. A stand alone receiver and/or stand alone transmitter may be used in lieu of or in conjunction with communication module 1204.

Apparatus 1200 may optionally include a means for storing information, such as, for example, a memory device/module 1208. Computer readable medium or memory device/module 1208 may be operatively coupled to the other components of apparatus 1200 via bus 1202 or the like. The computer readable medium or memory device 1208 may be adapted to store computer readable instructions and data for effecting the processes and behavior of means 1220-1240, and components thereof, or processor 1206 (in the case of apparatus 1200 configured as a computing device) or the methods disclosed herein.

In related aspects, the memory module 1208 may optionally include executable code for the processor module 1206 to authenticate a user by: (a) sending a reputation request for reputational information regarding a service account to a device authority, the request comprising a device identifier associated with the service account; (b) in response to the device authority verifying the reputation request, receiving the reputational information; and (c) providing for display the reputational information regarding the service account to one or more other users of the service. One or more of steps (a)-(c) may be performed by processor module 1106 in lieu of or in conjunction with the means 1220-1240 described above.

As noted above, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; any other predefined hardware information stored (optionally encrypted) in EEPROM; and any variations/combinations thereof.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method, at a device authority, for authenticating a user of a third party online service, comprising steps for:
receiving a device identifier and registration information from a client device of the user, the registration information comprising data that links the device identifier with at least one third-party account;
gathering reputational information regarding the at least one third-party account from one or more reputational sources;
associating the reputational information with the device identifier;
verifying, in response to receiving a reputation request regarding the at least one third-party account, a request source of the reputation request; and
providing, in response to verification of the request source, the reputational information to the request source.

2. The method of claim 1, wherein the gathering step comprises obtaining a credit score regarding a credit score regarding the user and associating the credit score with the device identifier.

3. The method of claim 2, wherein the credit score comprises a FICO score.

4. The method of claim 1, wherein gathering comprises obtaining any credit scores previously associated with the device identifier.

5. The method of claim 1, wherein gathering comprises receiving the reputational information from the service.

6. The method of claim 1, wherein the reputation request comprises the device identifier of the client device.

7. The method of claim 1, wherein the request source comprises the service.

8. The method of claim 1, wherein the reputational information comprises a warning about the user.

9. The method of claim 8, wherein the warning comprises instructions to ban at least one of the at least one third-party account and the client device.

10. A method, at an online service provider, for authenticating a user of a third party online service, comprising:
sending a reputation request for reputational information regarding a service account to a device authority, the request comprising a device identifier associated with the service account;
receiving, in response to the device authority verifying the reputation request, the reputational information; and
providing for display the reputational information regarding the service account to one or more other users of the service.

11. The method of claim 10, wherein receiving the reputational information comprises receiving at least one credit score associated with the device identifier.

12. The method of claim 10, wherein receiving the reputational information comprises receiving the reputational information from the device authority.

13. The method of claim 10, wherein receiving the reputational information comprises receiving the reputational information from a remote a server associated with the device authority.

14. The method of claim 10, wherein the reputational information comprises a warning about the user.

15. The method of claim 14, further comprising banning at least one of the service account and a client device associated with the device identifier.
